# EUROPEAN PATENT APPLICATION

(11) **EP 1 857 796 A1**
(43) Date of publication of application: **21.11.2007**
(21) Application number: 07009808.2
(22) Date of filing: 16.05.2007
(51) Int. Cl.: G01J 5/52, G01K 13/00

(54) **Portable test apparatus for radiation-sensing thermometer**

(30) Priority: 19.05.2006 US 419351
(71) Applicant: Covidien AG, 8212 Neuhausen am Rheinfall (CH)
(72) Inventor: Reinders, V. Mark, Creve Coeur Missouri 63141 (US); Flynn, Daniel P., Florissant Missouri 63034 (US); Price, Jeffrey E., Wildwood Missouri 63040 (US)
(74) Representative: Tomlinson, Edward James

(57) **Abstract**

A portable test apparatus for testing the accuracy of a radiation-sensing thermometer. The portable test apparatus comprises a target adapted to be maintained at a target temperature for sensing by the radiation-sensing thermometer. The apparatus also comprises a communication link adapted to receive temperature-sensing information from the radiation-sensing thermometer. The apparatus also comprises a processor adapted to analyze the received temperature-sensing information and to provide an indication to a user about whether the thermometer is functioning properly.

## Description

### FIELD OF THE INVENTION

The present invention generally relates to a portable test apparatus for testing the accuracy of electronic thermometers. More specifically, the present invention relates to testing the performance of a radiation-sensing (e.g., tympanic) thermometer to determine if the thermometer is functioning properly.

### BACKGROUND

The diagnosis and treatment of many body ailments depends upon an accurate reading of the internal or core temperature of a patient's body temperature reading, and in some instances, upon comparison to a previous body temperature. For many years, the most common way of taking a patient's temperature involved utilization of Mercury thermometers. However, such thermometers are susceptible to breaking and must be inserted and maintained in the rectum or mouth for several minutes, often causing discomfort to the patient.

Because of the drawbacks of conventional Mercury thermometers, electronic thermometers were developed and are now in widespread use. Although electronic thermometers provide relatively more accurate temperature readings than Mercury thermometers, they nevertheless share many of the same drawbacks. For example, even though electronic thermometers provide faster readings, some time must still pass before an accurate reading can be taken. Moreover, electronic thermometers must still be inserted into the patient's mouth, rectum, or axilla for direct contact with the tested portion of the patient's tissue.

Tympanic thermometers, those thermometers that sense the infrared emissions from the tympanic membrane, provide nearly instantaneous readings of core body temperature without the undue delay of other thermometers. The tympanic thermometer is generally considered by the medical community to be superior to oral, rectal, or axillary sites for taking a patient's temperature. This is because the tympanic membrane is more representative of the body's internal or core temperature and more responsive to changes in core temperature.

Typically, tympanic thermometers require calibration at the factory during manufacturing in order achieve the quick and accurate temperature reading capability noted above. After repeated use, however, tympanic thermometers may begin to lose accuracy for a variety of reasons. Thus, such thermometers should be tested regularly to ensure they are functioning properly. In particular, some conventional testing devices provide temperature targets for testing the accuracy of a thermometer. Such conventional devices must be connected to a personal computer to process the data provided by the thermometer, which may be cumbersome for some users. In particular, a portable testing device including processing capability sufficient to determine if the thermometer is functioning properly would be useful.

### SUMMARY

The following simplified summary provides a basic overview of some aspects of the present technology. This summary is not an extensive overview. It is not intended to identify key or critical elements or to delineate the scope of this technology. This Summary is not intended to be used as an aid in determining the scope of the claimed subject matter. Its purpose is to present some simplified concepts related to the technology before the more detailed description presented below.

Accordingly, embodiments of the present invention overcome one or more deficiencies in known thermometers and test apparatus by a portable test apparatus for testing the accuracy of a thermometer comprising a sensing target, a communication link, and a processor. A method for testing the accuracy of a thermometer by sensing a target and providing an indication to the user about the functioning of the thermometer is also disclosed.

Fig. 1 is a schematic of a test system of the present invention;

Fig. 2 is a front view of a portable test apparatus of the present invention with portions broken away to show internal parts;

Fig. 3 is a flow diagram of a method of an embodiment of the present invention; and

Figs. 4A-4J are exemplary flow diagrams of another method of an embodiment of the present invention.

Corresponding reference characters indicate corresponding parts throughout the drawings.

### DETAILED DESCRIPTION OF THE PREFERRED EMBODIMENTS

### Test System

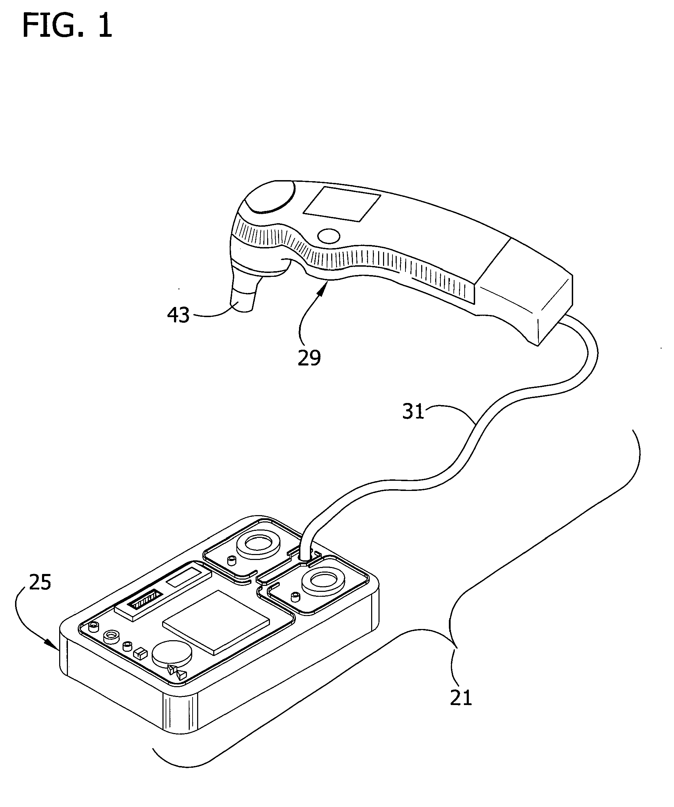

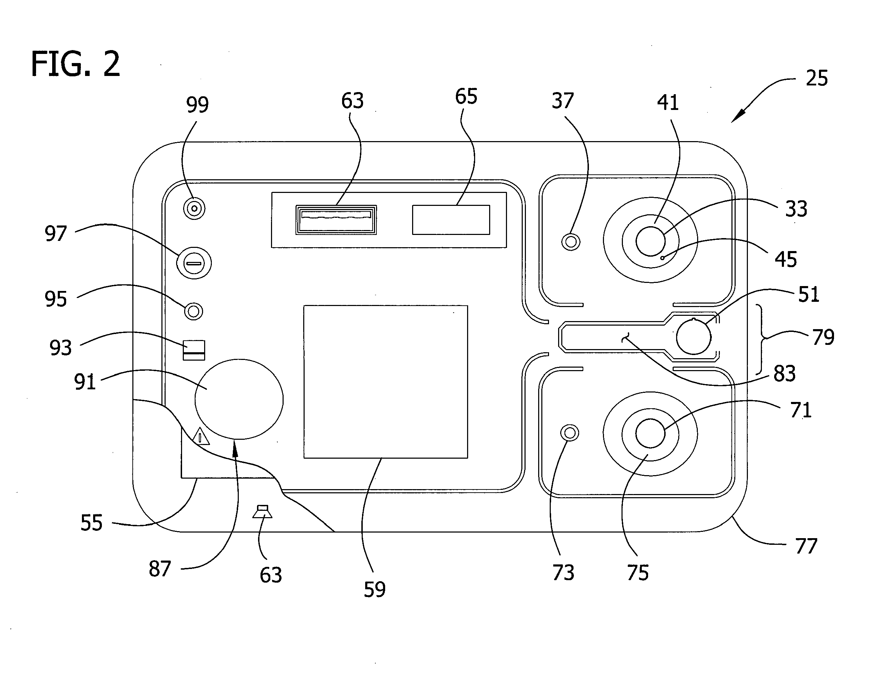

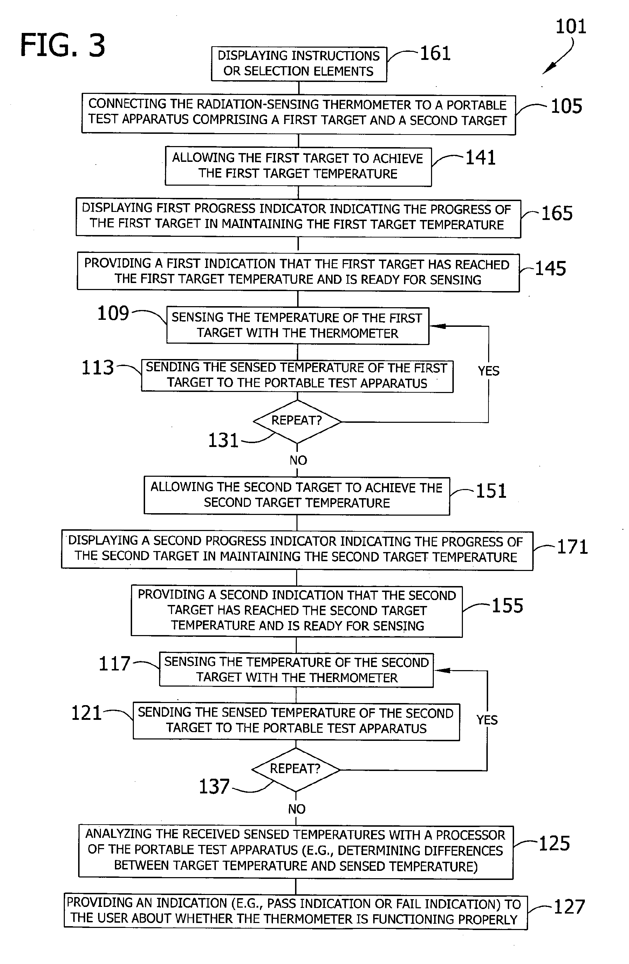

In the embodiment depicted in Fig. 1, a test system, generally indicated 21, for initiating a test procedure is disclosed. The test system 21 comprises a portable test apparatus, generally indicated 25. The portable test apparatus 25 is discussed in detail below with respect to Fig. 2. The test system 21 further comprises a radiation-sensing thermometer, generally indicated 29, connected to the portable test apparatus 25 via a connection wire 31. The thermometer 29 includes at least one sensor adapted to determine a temperature of an object (e.g., a tympanic membrane) based upon sensed radiation. The combination of the thermometer 29 and the portable test apparatus 25 provide a portable test system 21 for testing of the thermometer at virtually any location (e.g., a physician's office or hospital clinic). The operation and features of the portable test apparatus 25 are discussed in detail below with respect to Figs. 2 and 3.

### Portable Test Apparatuses

Referring now to Fig. 2, the portable test apparatus 25 adapted for testing the accuracy of a radiation-sensing thermometer 29 (e.g., a tympanic thermometer) is shown. The portable test apparatus 25 comprises a target 33, or first target, adapted to be maintained at a target temperature for sensing by the radiation-sensing thermometer 29. Because the temperature of the target 33 is maintained at a known, precise, and constant temperature, it is useful in calibrating such a radiation-sensing thermometer 29. In one example, the target 33 comprises an infrared blackbody temperature target. In another example, the target 33 comprises a heating element (e.g., a resistor) controlled to maintain the target at a known, precise, and constant temperature. The portable test apparatus 25 may further comprise an indicator 37, or a first indicator, associated with the target 33 adapted to indicate that the target has reached the target temperature and is ready for sensing by the radiation-sensing thermometer 29. This indicator 37 may take any form suitable for indicating status to the user, including the light-emitting diode (LED) depicted in Fig. 2.

In another example, the target 33 further comprises a nest 41 shaped and sized for at least one of locating and orienting a sensing portion 43 (see Fig. 1) of the thermometer 29 for sensing. The interaction of the nest 41, and the sensing portion 43 helps ensure that the thermometer 29 is sensing the correct portion of the target 33. In still another example, the target 33 also comprises a sensor 45 adapted to detect when the sensing portion 43 of the thermometer 29 is seated properly in the nest 41. Moreover, the portable test apparatus 25 may indicate to the user that the thermometer 29 is seated properly, such as with the display discussed in detail below.

The portable test apparatus 25 further comprises a communication link 51 adapted to receive temperature-sensing information from the radiation-sensing thermometer 29. Various communication links 51 may be utilized without departing from the scope of the present invention. In one embodiment, the communication link 51 comprises a connector (also indicated 51) for connecting with the thermometer 29 via the communication wire 31. In another embodiment, the communication link 51 comprises a wireless communication device, such as a wireless network card, for connecting wirelessly with the thermometer 29. Other communication links 51 may be utilized without departing from the scope of the present invention.

The portable test apparatus 25 further comprises a processor 55 adapted to analyze the received temperature-sensing information and to provide an indication to a user about whether the thermometer 29 is functioning properly. The processor 55 is further adapted to provide a pass indication to the user if the thermometer 29 is functioning properly. The processor 55 is also adapted to provide a fail indication to the user if the thermometer 29 is functioning improperly. Because the portable test apparatus 25 includes a processor 55, there is no need to connect the apparatus to an additional computing device, such as a personal or laptop computer. This improves the portability of the apparatus 25 and allows a user to test the accuracy of a radiation-sensing thermometer 29 at virtually any location (e.g., in a hospital or in a physician's office).

The portable test apparatus 25 may further comprise a display 59 adapted to provide information to a user of the portable test apparatus, such as information relating to the tested thermometer 29. The pass and fail indications described above may be provided to the user via the display 59. Moreover, if the thermometer 29 is functioning improperly, in one embodiment, the processor 55 is further adapted to provide a failure analysis to the user. Similarly, if the thermometer 29 is not functioning improperly, in another embodiment, the processor 55 is further adapted to provide a pass analysis to the user. For example, the failure analysis may comprise at least one of (i) a failure code corresponding to a particular failure analysis (e.g., radiation sensor providing no signal, thermometer not connected properly, etc.) and (ii) an indication of the differences between the target temperatures and the temperatures sensed by the thermometer (e.g., error is ± 0.5 degrees C, etc.). In another example, the pass analysis may comprise an indication of the differences between the target temperatures and the temperatures sensed by the thermometer. Again, the failure analysis or pass analysis may be provided to the user via the display 59. In another example, the display 59 is adapted to display the indication of the accuracy of the thermometer (e.g., thermometer is accurate to ± 0.01 degrees C). A variety of information may be displayed to the user on the display 59 without departing from the scope of the present invention.

The portable test apparatus 25 may further comprise an audio device 63 adapted to provide auditory feedback to a user of the portable test apparatus. For example, a speaker, also noted with reference number 63, may be included in the apparatus 25 for providing auditory feedback to the user. The speaker 63 could, for example, alert the user that the target 33 has reached its target temperature, that the thermometer 29 is seated properly in the nest 41, or that the thermometer is working accurately, among others.

The portable test apparatus 25 may further comprise a data storage device interface 63 adapted to communicate with a data storage device for storing information, such as the temperature-sensing information received from the radiation-sensing thermometer 29. In one example, the data storage device interface 63 is adapted for communicating with a removable data storage device, such as a floppy disc, a universal serial bus (USB) drive, or a removable, nonvolatile data storage device (e.g., Flash, EEPROM), among others, also utilized for storing information related to the thermometer testing. Such an data storage device interface 63 provides a low cost, readily available electronic interface that is portable and can communication with a portable data storage device (e.g., a USB drive). The removable data storage device may be adapted to store a variety of information. For example, the removable data storage device communicating with the data storage device interface 63 may store at least one of (i) the date of receipt of the temperature-sensing information, (ii) the time of receipt of the temperature-sensing information, (iii) the location of the portable test apparatus 25 upon receipt of the temperature-sensing information, (iv) the identity of the user of the portable test apparatus, (v) an identifier associated with the particular thermometer 29 being tested, (vi) a pass indication if the thermometer is functioning properly, and (vii) a fail indication if the thermometer is functioning improperly. In another embodiment, the removable data storage device (e.g., a USB drive) stores the calibration record according to the serial number of the thermometer 29 in a standard text file. The text file can be readily converted into other file types, such as spreadsheets (e.g., Microsoft® Excel spreadsheets) or databases. Storage of the calibration record is often necessary for reporting requirements and record-retention policies. Other information may be stored on the removable data storage device by the portable test apparatus 25 without departing from the scope of the present invention. This information may be entered into the portable test apparatus 25 by a user, collected from a data source (e.g., the thermometer 29), or produced (e.g., calculated) by the processor 55. In another example, the portable test apparatus 25 may further comprise an internal memory 65 for storing information related to the thermometer testing, either in addition to or instead of the data storage device interface 63.

In an alternative embodiment, such as the embodiment of Fig. 2, the portable test apparatus 25 may further comprise a second target 71 adapted to be maintained at a second target temperature different from the target temperature for sensing by the radiation-sensing thermometer 29. The second target 71 includes a second LED indicator 73 and a second nest 75 generally as set forth above with respect to target 33. The purpose of such a second target 71 is to provide a second test point for checking the accuracy of the thermometer 29. For example, the target, or first target, may maintain a temperature representing the lower end of the typical range of thermometer use (e.g., 36 degrees C (97 degrees F)), while the second target may maintain a temperature representing the upper end of the typical range (e.g., 39 degrees C (102 degrees F)). Other targets defining other typical ranges are also contemplated as within the scope of the claimed invention. If the thermometer 29 is capable of providing accurate results for the temperatures at each end of such a typical range, then the thermometer is more likely to be functioning properly over the entire typical working range. A single target temperature, on the other hand, may verify the accuracy of the thermometer 29 at the given temperature, while providing no indication that the thermometer works accurately at other portions of the typical working range.

Beyond indicating that the targets 33, 71 are warmed-up and ready for use, the LEDs 37, 73 may be utilized by the apparatus 25 to instruct the user regarding which target to use. For example, in one embodiment, the apparatus 25 illuminates the first LED indicator 37 to indicate that the user should insert the thermometer 29 into the first target 33. The apparatus 25 further detects insertion of the thermometer 29 and prompts the user to press a test button. In another example, the apparatus 25 may detect insertion of the thermometer 29 and begin testing the thermometer 29, without requiring depression of the test button. Once testing of the thermometer 29 at the first target 33 is complete, the apparatus illuminates the second LED indicator 73 to indicate that the user should remove the thermometer 29 from the first target 33 and insert it into the second target 71. As with the first target 33, the apparatus 25 detects insertion of the thermometer 29 into the second target 71 and prompts the user to press the test button. In another example, the apparatus 25 may detect insertion of the thermometer 29 into the second target 71 and begin testing the thermometer 29, without requiring depression of the test button.

The embodiment of the portable test apparatus 25 depicted in Fig. 2 further comprises a housing 77 supporting the various components of the apparatus. As shown in Fig. 2, the target 33 and the second target 71 are positioned on the housing 77 relative to one another to create an air gap 79 between the target and the second target. The air gap 79 is adapted to maintain thermal isolation between the target 33 and the second target 71. In another alternative embodiment, the portable test apparatus 25 may further comprise insulation 83 disposed between the target 33 and the second target 71 adapted to further maintain thermal isolation between the target and the second target.

In still another embodiment, the portable test apparatus 25 comprises a user input device, generally indicated 87, adapted for use by a user in at least one of controlling and communicating with the test apparatus. Any number of user input devices 87 may be utilized without departing from the scope of the present invention. For example, the portable test apparatus 25 of Fig. 2 includes an encoder knob 91 mounted on the housing 77 for controlling and/or communicating with the apparatus. The encoder knob 91 is useful in navigating option menus on the display 59, whereby rotation of the encoder knob moves from one menu choice to another, while depressing the menu knob selects the menu item currently highlighted. Other user input devices, such as a keypad, a joystick, a touchpad, a stylus, and a group of buttons, are also contemplated as within the scope of the present invention. The portable test apparatus 25 may also include other devices, such as a power switch 93 for turning the portable test apparatus on and off, a power indicator light 95 indicating whether the power is turned on or off, a fuse 97 acting as an amperage limiter on the portable test apparatus, and a power supply connector 99 for connecting a power cord, all depicted in Fig. 2. In addition to corded power, the portable test apparatus 25 may also include an internal battery for operating the apparatus and/or writing data to the removable data storage device via the data storage device interface 63 or storing data in the internal memory 65.

In still another alternative embodiment, another portable test apparatus 25 for testing the accuracy of a radiation-sensing thermometer 29 is disclosed. The portable test apparatus 25 of this embodiment comprises a communication link 51 and a processor 55 generally as set forth above. The portable test apparatus 25 also comprises the target 33, generally as set forth above. In addition to maintaining the target 33 at a single target temperature, the target is further adapted to be maintained at a first target temperature for sensing by the radiation-sensing thermometer 29 at a first time and at a second target temperature different from the first target temperature for sensing by the radiation-sensing thermometer at a second time. This allows a single target 33 to be used for two temperatures, thereby reducing the number of targets required for the apparatus 25. Methods for Testing Thermometer Accuracy

In still another embodiment, a method, generally indicated 101, for testing the accuracy of a radiation-sensing thermometer 29 is disclosed. The method comprises connecting, at 105, the radiation-sensing thermometer 29 to a portable test apparatus 25 comprising a first target 33 and a second target 71, generally as set forth above.

The method also comprises sensing, at 109, the temperature of the first target 33 with the thermometer 29 and sending, at 113, the sensed temperature of the first target to the portable test apparatus 25. The method further comprises sensing, at 117 the temperature of the second target 71 with the thermometer and sending, at 121, the sensed temperature of the second target to the portable test apparatus.

The method further contemplates analyzing, at 125, the received sensed temperatures with the processor 55, generally as set forth above, of the portable test apparatus 25. In one example, the analyzing 125 further comprises determining, also at 125, that the thermometer is not functioning properly if any of the differences between the target temperatures and the respective temperatures sensed by the thermometer are greater than about ± 0.3 degrees C (± 0.5 degrees F). In another example, the analyzing 125 further comprises determining, also at 125, that the thermometer is not functioning properly if any of the differences between the target temperatures and the respective temperatures sensed by the thermometer are greater than about ± 0.2 degrees C (± 0.4 degrees F). As would be readily understood by one skilled in the art, in yet another example, the thermometer is determined to not function properly if it does not satisfy the guidelines set forth by the European Committee for Standardization (CEN), as set forth in the European Standard entitled "Clinical thermometers - Part 5: Performance of infra-red ear thermometers (with maximum device)."

The method further provides, at 127, an indication to the user about whether the thermometer 29 is functioning properly. In one embodiment, the providing 127 further comprises providing, also at 127, a pass indication to the user if the thermometer 29 is functioning properly and providing a fail indication to the user if the thermometer is functioning improperly.

In one alternative embodiment, the method may further comprise repeating, at 131, the sensing 109 and sending 113 for the first target 33 before the providing 127. In another alternate embodiment, the method may further comprise repeating, at 137, the sensing 117 and sending 121 for the second target 71 before the providing 127. In one example, the first target 33 and second target 71 are each sensed 109,117 three times. These alternative embodiments provide further measurements for the first target 33 and the second target 71 to determine if the thermometer 29 measures the same temperature consistently. These repetitions may be repeated as many times as is required, without departing from the scope of the present invention. In addition, the additional data points for each target 33, 71 may be averaged together in an effort to improve the testing, such as to minimize any slight variations in the temperatures of the targets during sensing 109,117.

In another exemplary embodiment, the method may further allow, at 141, the first target 33 to achieve the first target temperature before sensing 109 the temperature of the first target with the thermometer 29. The method may also comprise providing, at 145, a first indication that the first target 33 has reached the first target temperature and is ready for sensing 109 by the radiation-sensing thermometer 29 before sensing 109 the temperature of the first target with the thermometer. In the embodiment depicted in Fig. 2, this first indication may be the LED 37 discussed above. Similarly, the method may further allow, at 151, the second target 71 to achieve the second target temperature before the sensing 117 the temperature of the second target with the thermometer 29. The method may also comprise providing, at 155, a second indication that the second target 71 has reached the second target temperature and is ready for sensing by the radiation-sensing thermometer 29 before sensing 117 the temperature of the second target with the thermometer. In the embodiment depicted in Fig. 2, the second indication may be the second LED 73 located adjacent the second target 71. Other indications are also contemplated as within the scope of the present invention. For example, the display 59 may instruct the user that one or more of the targets 33, 71 is now ready for use.

In still another embodiment, the method may further comprise displaying, at 161, instructions for the user to perform at least one of the connecting 105, the sensing 109 the temperature of the first target with the thermometer, and the sensing 117 the temperature of the second target with the thermometer. For example, the method may further comprise displaying, at 165, at least one of a first progress indicator indicating the progress of the first target 33 in maintaining the first target temperature, such as during the initial warm-up of the portable test apparatus 25. The method may further comprise displaying, at 171, a second progress indicator indicating the progress of the second target 71 in maintaining the second target temperature. The user may review these progress indicators to determine if the portable test apparatus 25 is ready for use. In another example, the method may comprise displaying, also at 165, 171, a combined progress indicator indicating the progress of the first target 33 and second target 71 in maintaining their respective temperatures. The display of the progress indicators may take several forms, including progress bars and/or countdown timers, without departing from the scope of the invention. Moreover, the audio device 63 may provide auditory feedback to the user indicating the status of the progress indicators, including feedback that the targets 33, 71 are ready for use.

The method may further comprise displaying, also at 161, one or more selection elements (e.g., menus) for selection by the user to control the operation of the portable test apparatus 25. For example, the user may utilize the user input device 87 to select at least one of the language displayed by the apparatus 25, set or modify the current date and/or time, set or modify the location of use of the portable test apparatus, set or modify the identity of the user of the portable test apparatus, and /or set or modify an identifier associated with the particular thermometer 29 being tested.

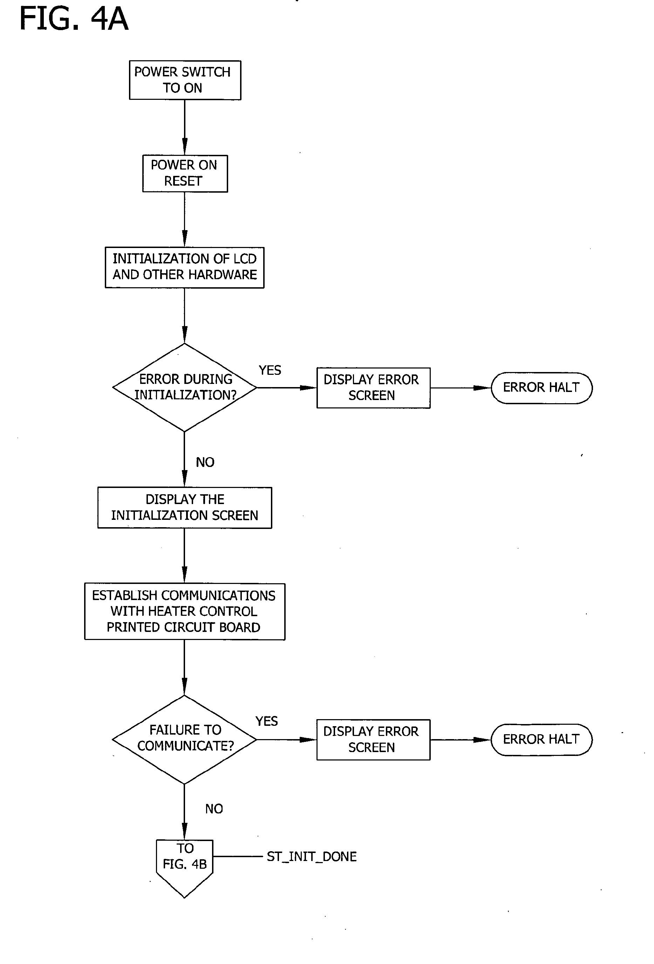

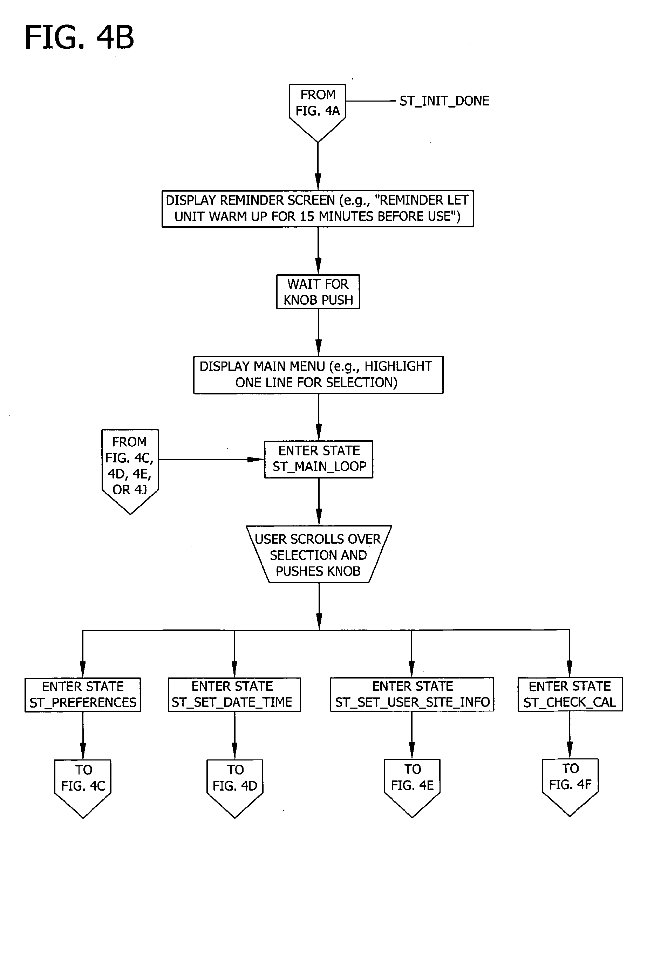

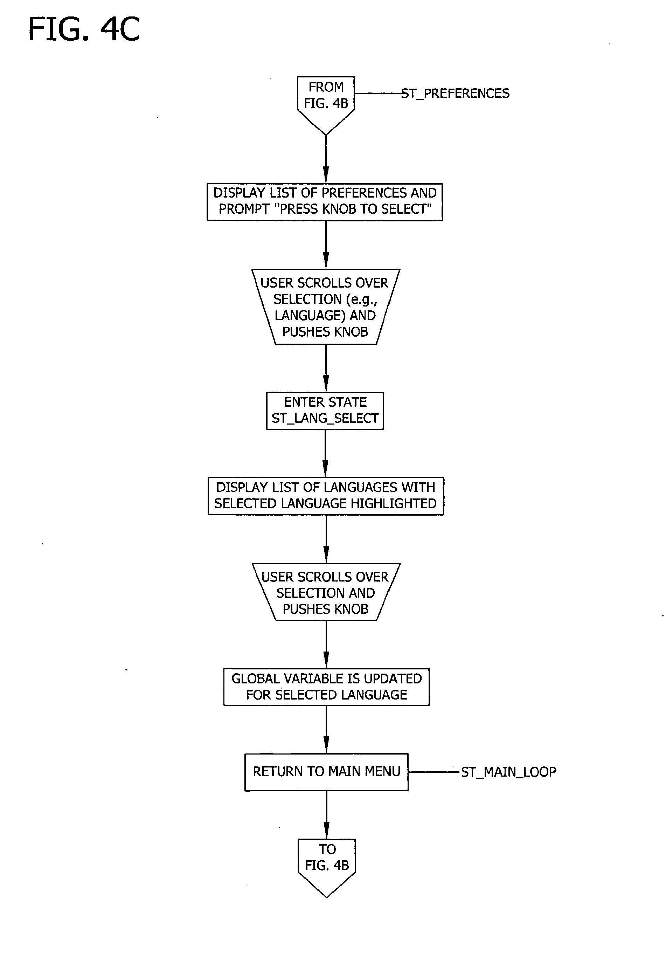

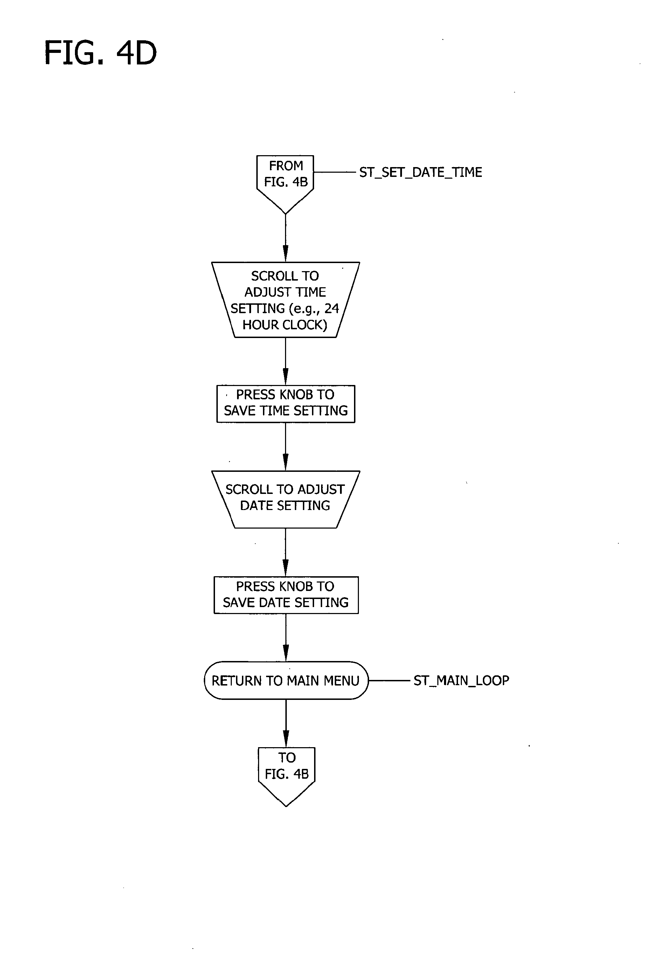

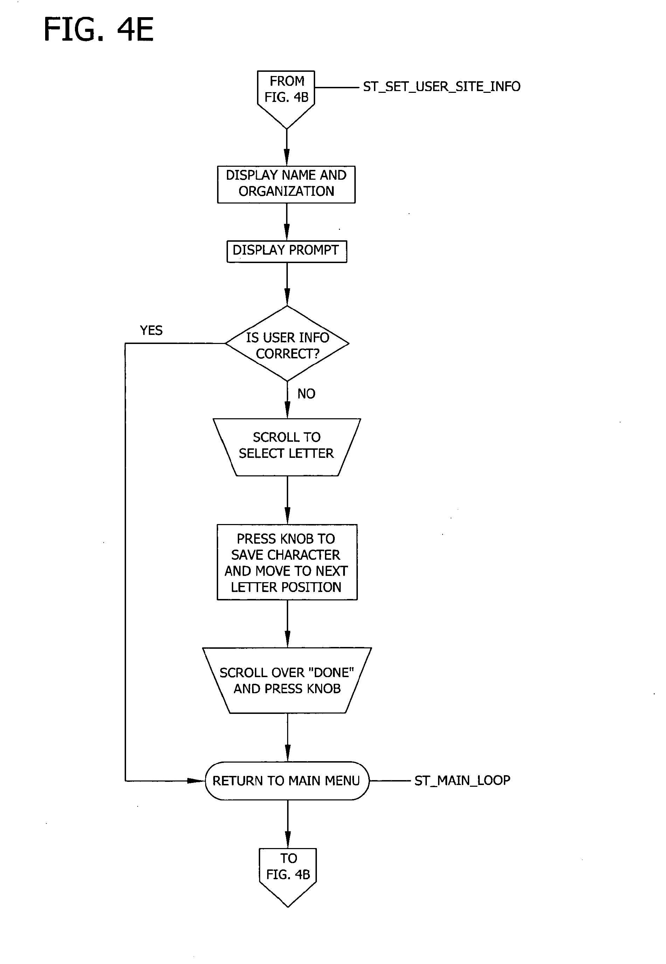

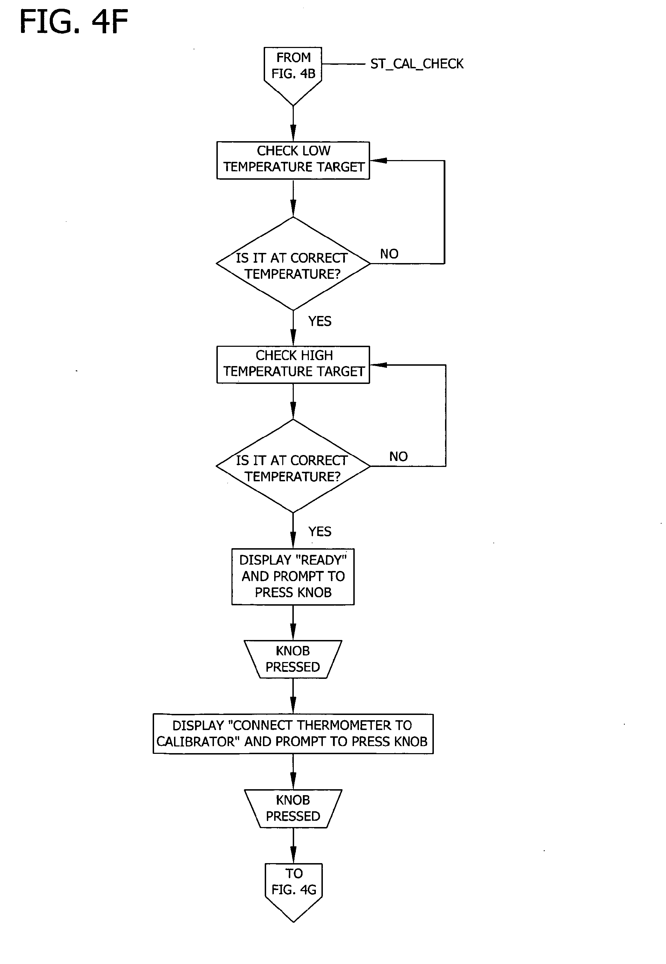

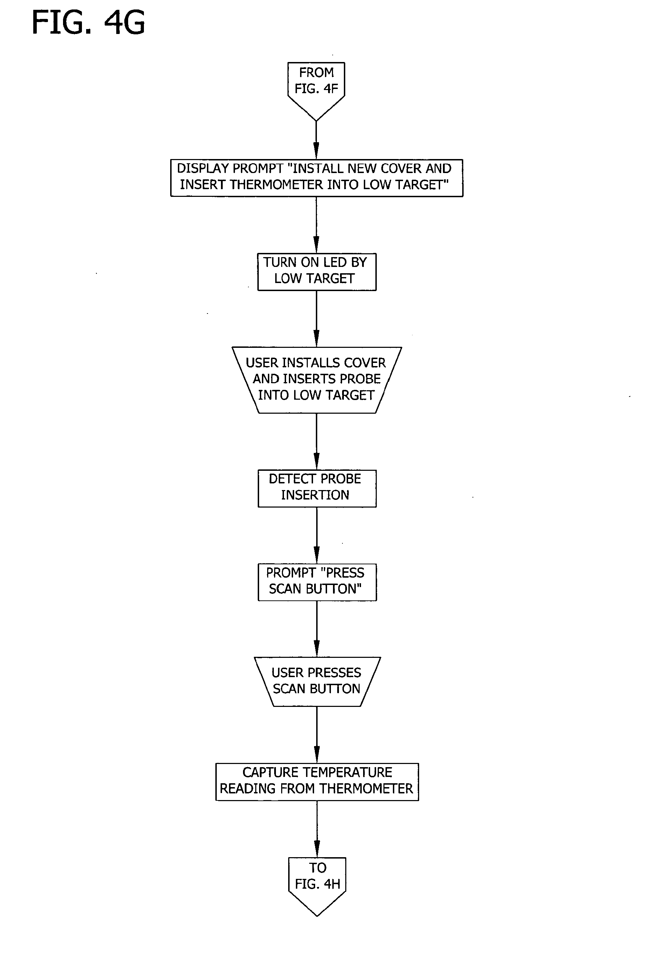

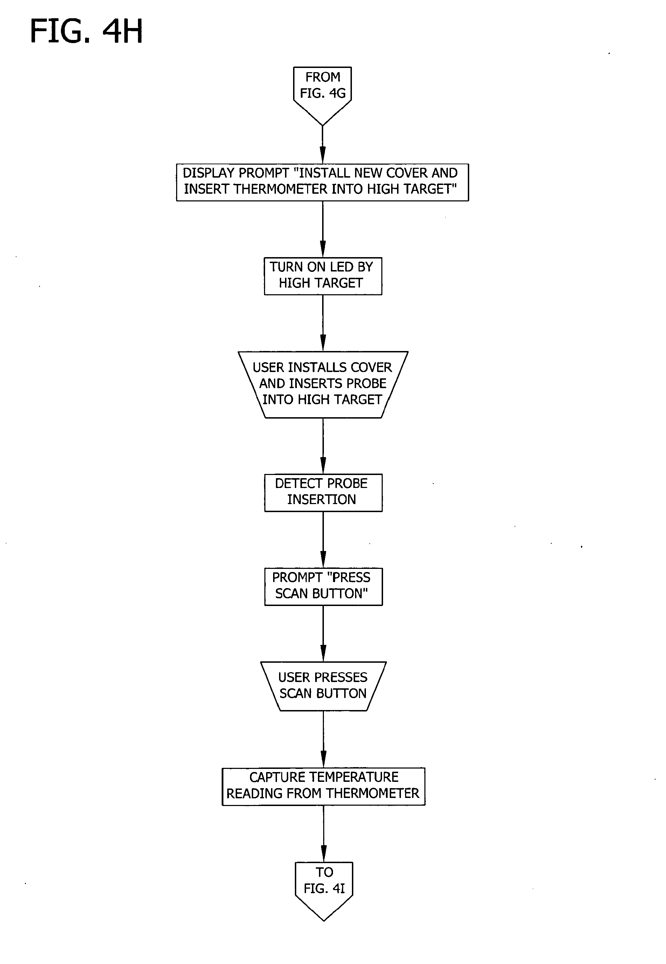

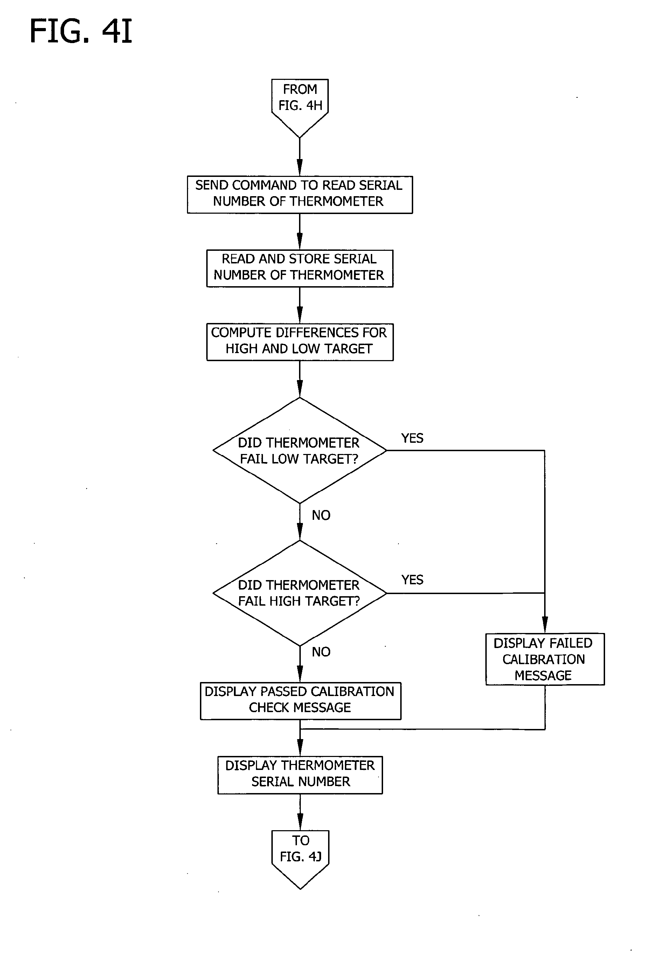

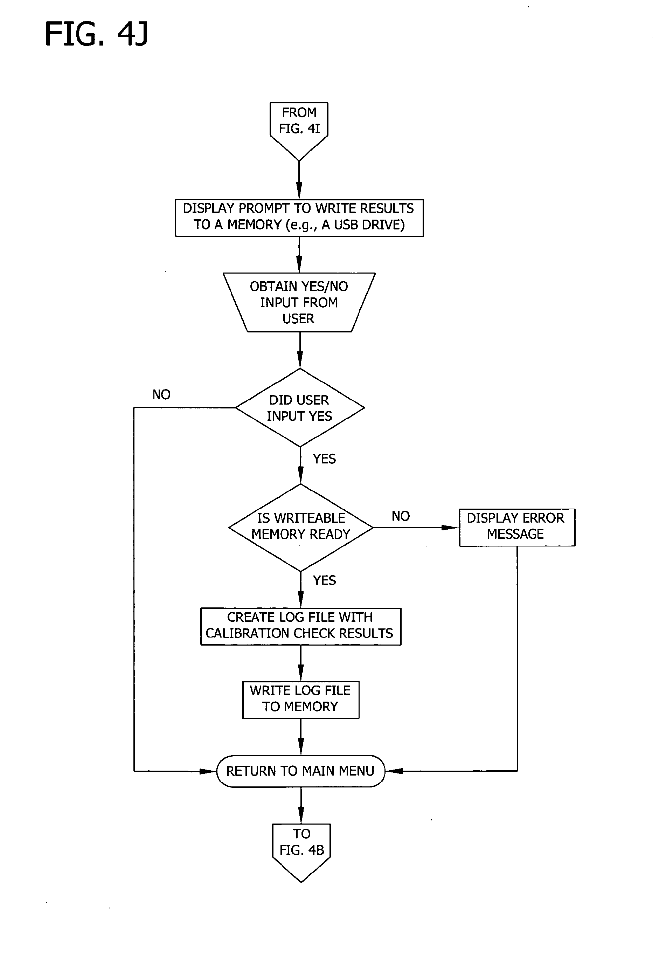

Figs. 4A-4J are exemplary flow diagrams of another method of an embodiment of the present invention. Fig. 4A depicts an initiation process for initiating the portable test apparatus 25 before use. Fig. 4B depicts a selection process for selecting an additional subprocess. Fig. 4C depicts a selection process for selecting preferences of the apparatus 25. Fig. 4D depicts a setting process for setting a date and a time of the apparatus 25. Fig. 4E depicts a data input process for inputting user data into the apparatus 25, such as a name or other identifier, for example. Figs. 4F-4J depict a testing process for testing the performance of the apparatus 25 and reporting on such performance. It should be understood that these flow diagrams are exemplary only and may be modified, added to, or deleted from without departing from the scope of the present invention.

Those skilled in the art will note that the order of execution or performance of the methods illustrated and described herein is not essential, unless otherwise specified. That is, it is contemplated by the inventors that elements of the methods may be performed in any order, unless otherwise specified, and that the methods may include more or less elements than those disclosed herein.

When introducing elements of the present invention or the embodiment(s) thereof, the articles "a," "an," "the," and "said" are intended to mean that there are one or more of the elements. The terms "comprising," "including," and "having" are intended to be inclusive and mean that there may be additional elements other than the listed elements.

As various changes could be made in the above products and methods without departing from the scope of the invention, it is intended that all matter contained in the above description and shown in the accompanying drawings shall be interpreted as illustrative and not in a limiting sense.

## Claims

1. A portable test apparatus for testing the accuracy of a radiation-sensing thermometer, said portable test apparatus comprising:
a target adapted to be maintained at a target temperature for sensing by the radiation-sensing thermometer;
a communication link adapted to receive temperature-sensing information from the radiation-sensing thermometer; and
a processor adapted to analyze the received temperature-sensing information and to provide an indication to a user about whether the thermometer is functioning properly.

2. A portable test apparatus as set forth in claim 1 wherein said processor is further adapted to provide a pass indication to the user if the thermometer is functioning properly and to provide a fail indication to the user if the thermometer is functioning improperly.

3. A portable test apparatus as set forth in claim 2 wherein said processor is further adapted to provide at least one of a failure analysis to the user if the thermometer is functioning improperly and a pass analysis to the user if the thermometer is functioning properly.

4. A portable test apparatus as set forth in claim 3 wherein said failure analysis comprises at least one of (i) a failure code corresponding to a particular failure analysis and (ii) an indication of the differences between the target temperatures and the temperatures sensed by the thermometer; and wherein said pass analysis comprises an indication of the differences between the target temperatures and the temperatures sensed by the thermometer.

5. A portable test apparatus as set forth in claim 1 further comprising a display adapted to provide information to a user of the test apparatus.

6. A portable test apparatus as set forth in claim 5 wherein said display is adapted to display the indication of the accuracy of the thermometer.

7. A portable test apparatus as set forth in claim 1 wherein said target comprises an infrared blackbody temperature target.

8. A portable test apparatus as set forth in claim 1 wherein said target comprises a nest shaped and sized for at least one of locating and orienting a sensing portion of the thermometer.

9. A portable test apparatus as set forth in claim 8 wherein said target comprises a sensor adapted to detect when the sensing portion of the thermometer is seated properly in the nest.

10. A portable test apparatus as set forth in claim 1 further comprising an indicator associated with said target adapted to indicate that the target has reached the target temperature and is ready for sensing by the radiation-sensing thermometer.

11. A portable test apparatus as set forth in claim 1 further comprising a data storage device interface adapted to communicate with a data storage device for storing the temperature-sensing information received from the radiation-sensing thermometer on the data storage device.

12. A portable test apparatus as set forth in claim 11 wherein said data storage device interface is further adapted to communicate with the data storage device for storing at least one of the date of receipt of the temperature-sensing information, the time of receipt of the temperature-sensing information, the location of the test apparatus upon receipt of the temperature-sensing information, the identity of the user of the portable test apparatus, an identifier associated with the particular thermometer being tested, a pass indication if the thermometer is functioning properly, and a fail indication if the thermometer is functioning improperly.

13. A portable test apparatus as set forth in claim 11 further comprising an internal memory.

14. A portable test apparatus as set forth in claim 1 further comprising a second target adapted to be maintained at a second target temperature different from said target temperature for sensing by the radiation-sensing thermometer.

15. A portable test apparatus as set forth in claim 14 further comprising a housing, said target and said second target positioned on said housing relative to one another to create an air gap between the target and the second target adapted to maintain thermal isolation between the target and the second target.

16. A portable test apparatus as set forth in claim 15 further comprising insulation disposed between the target and the second target adapted to maintain thermal isolation between the target and the second target.

17. A portable test apparatus as set forth in claim 1 further comprising a user input device adapted for use by a user in at least one of controlling and communicating with the test apparatus.

18. A portable test apparatus as set forth in claim 17 wherein said user input device comprises at least one of an encoder knob, a keypad, a joystick, a touchpad, a stylus, and a group of buttons.

19. A portable test apparatus as set forth in claim 1 wherein said communication link comprises at least one of a connector for connecting with the thermometer via a communication wire and a wireless communication device for connecting wirelessly with the thermometer.

20. A portable test apparatus as set forth in claim 1 wherein said radiation-sensing thermometer is a tympanic thermometer.

21. A method for testing the accuracy of a radiation-sensing thermometer, said method comprising:
connecting the radiation-sensing thermometer to a portable test apparatus comprising a first target adapted to be maintained at a first target temperature for sensing by the radiation-sensing thermometer and a second target adapted to be maintained at a second target temperature different from said first target temperature for sensing by the radiation-sensing thermometer;
sensing the temperature of the first target with the thermometer;
sending the sensed temperature of the first target to the portable test apparatus;
sensing the temperature of the second target with the thermometer;
sending the sensed temperature of the second target to the portable test apparatus;
analyzing the received sensed temperatures with a processor of the portable test apparatus; and
providing an indication to the user about whether the thermometer is functioning properly.

22. A method as set forth in claim 21 wherein said providing further comprises providing a pass indication to the user if the thermometer is functioning properly and providing a fail indication to the user if the thermometer is functioning improperly.

23. A method as set forth in claim 21 wherein said analyzing further comprises determining that the thermometer is not functioning properly if any of the differences between the target temperatures and the respective temperatures sensed by the thermometer are greater than about ± 0.3 degrees C (± 0.5 degrees F).

24. A method as set forth in claim 23 wherein said analyzing further comprises determining that the thermometer is not functioning properly if any of the differences between the target temperatures and the respective temperatures sensed by the thermometer are greater than about ± 0.2 degrees C (± 0.4 degrees F).

25. A method as set forth in claim 21 further comprising repeating the sensing and sending for the first target before said providing and repeating the sensing and sending for the second target before said providing.

26. A method as set forth in claim 21 further comprising allowing the first target to achieve the first target temperature before said sensing the temperature of the first target with the thermometer; and
allowing the second target to achieve the second target temperature before said sensing the temperature of the second target with the thermometer.

27. A method as set forth in claim 26 further comprising providing a first indication that the first target has reached the first target temperature and is ready for sensing by the radiation-sensing thermometer before said sensing the temperature of the first target with the thermometer; and
providing a second indication that the second target has reached the second target temperature and is ready for sensing by the radiation-sensing thermometer before said sensing the temperature of the second target with the thermometer.

28. A method as set forth in claim 21 further comprising displaying instructions for the user to perform at least one of the connecting, the sensing the temperature of the first target with the thermometer, and the sensing the temperature of the second target with the thermometer.

29. A method as set forth in claim 21 further comprising displaying a selection element for selection by the user to control the operation of the portable test apparatus.

30. A method as set forth in claim 21 further comprising displaying at least one of a first progress indicator indicating the progress of the first target in maintaining the first target temperature, a second progress indicator indicating the progress of the second target in maintaining the second target temperature, and a combined progress indicator indicating the progress of the first target and second target in maintaining their respective temperatures.

31. A portable test apparatus for testing the accuracy of a radiation-sensing thermometer, said portable test apparatus comprising:
a target adapted to be maintained at a first target temperature for sensing by the radiation-sensing thermometer at a first time and at a second target temperature different from said first target temperature for sensing by the radiation-sensing thermometer at a second time;
a communication link adapted to receive temperature-sensing information from the radiation-sensing thermometer; and
a processor adapted to analyze the received temperature-sensing information and to provide an indication to a user about whether the thermometer is functioning properly.

32. A test system for initiating a test procedure, said system comprising:
a radiation-sensing thermometer including at least one sensor adapted to determine a temperature reading based upon sensed radiation; and
a test apparatus communicating with said thermometer, said test apparatus comprising:
a target adapted to be maintained at a target temperature for sensing by the radiation-sensing thermometer;
a second target adapted to be maintained at a second target temperature different from said target temperature for sensing by the radiation-sensing thermometer;
a communication link adapted to receive temperature-sensing information from the radiation-sensing thermometer; and
a processor adapted to analyze the received temperature-sensing information and to provide an indication to a user about whether the thermometer is functioning properly.
